# EUROPÄISCHE PATENTSCHRIFT

(11) **EP 0 846 901 B1**
(45) Veröffentlichungstag und Bekanntmachung des Hinweises auf die Patenterteilung: **17.03.2004**
(21) Anmeldenummer: 97121294.9
(22) Anmeldetag: 04.12.1997
(51) Int. Cl.: F16K 1/00, F16K 17/04

(54) **Absperrvorrichtung für die Befülleinrichtung eines Druckbehälters**
Shut-off device for a filling installation of a pressure container
Dispositif de fermeture pour une installation de remplissage d'un conteneur sous pression

(30) Priorität: 05.12.1996 DE 19650560
(43) Veröffentlichungstag der Anmeldung: 10.06.1998
(73) Patentinhaber: Messer Griesheim GmbH, 65933 Frankfurt am Main (DE)
(72) Erfinder: Tocha, Klaus, 40764 Langenfeld (DE)

(56) Entgegenhaltungen:
- WO-A-94/02768
- DE-A- 2 847 956
- DE-C- 4 320 748
- FR-A- 1 442 205
- GB-A- 2 204 661
- US-A- 3 426 779
- US-A- 5 261 450
- US-A- 5 404 903

## Beschreibung

Die Erfindung betrifft eine Absperrvorrichtung für die Befülleinrichtung eines Druckbehälters, insbesondere zur Speicherung tiefkalt verflüssigter Gase, gemäß dem Oberbegriff des Patentanspruchs 1.

Es sind Absperrarmaturen für Druckbehälter bekannt, bei denen zum Befüllen des Druckbehälters eine fremdgesteuerte Sicherheits-Absperrarmatur vorgesehen ist. Diese Absperrarmatur wird zum Befüllen durch eine Öffnungsvorrichtung entgegen der Kraft einer Schließfeder geöffnet, wobei diese Schließfederkraft größer als die vom Nenndruck im Behälter erzeugte Öffnungsdruckkraft ist.

Aus der DE 43 20 748 C1 ist eine Absperrarmatur bekannt, bei der ein entgegen der Kraft von Federn in Offenstellung bringbarer Ventilkörper mit einem vorstehenden Ringbund versehen ist, in welchen ein um eine Achse schwenkbar gelagerter Rasthebel eingreift und somit den Ventilkörper in Offenstellung hält. Bei Auftreten eines Überdrucks wird eine mit dem Rasthebel zusammenwirkende Kolbenstange derart bewegt, dass der Rasthebel verschwenkt und somit die Ventilstange freigibt.

Der Erfindung liegt die Aufgabe zugrunde, eine Absperrvorrichtung der genannten Art so auszubilden, dass die Behältersicherheit vor allem beim Befüllen des Behälters erhöht wird, insbesondere der Behälter vor einem Bersten aufgrund eines unzulässig hohen Ansteigens des Innendruckes zuverlässig geschützt wird.

Zur Lösung dieser Aufgabe zeichnet sich die erfindungsgemäße Absperrvorrichtung durch die Merkmale des kennzeichnenden Teils des Patentanspruchs 1 aus.

Die Vorrichtung zur Arretierung des Ventilkörpers ist erfindungsgemäß von einem am Ventilgehäuse schwenkbar angebrachten Rasthebel gebildet, der zum Arretieren mit einer Rastausnehmung am Ventilkörper bzw. an einer damit verbundenen Ventilspindel zusammenwirken kann. Dabei ist der Rasthebel um einen zur Achse des Ventilgliedes versetzt angeordneten Drehpunkt am Ventilgehäuse schwenkbar gelagert, so dass die Schließkräfte ein Drehmoment auf den Rasthebel im Freigabesinne ausüben.

Bei der Erfindung wird so bei Überschreiten eines vorgegebenen Behältergrenzdrucks die Arretierung zur Offenstellung des Ventilkörpers ohne Einsatz externer Steuer- und Signalenergie freigegeben. Die Absperrvorrichtung schließt dann unter der Wirkung der Schließfeder das Ventil selbsttätig.

Bei einer Weiterbildung der Erfindung umfasst die Auslösevorrichtung ein Arretierelement, das gesteuert durch den Behälterdruck zwischen einer das Sperrglied blockierenden Arretierposition und einer entlastenden Freigabeposition verlagerbar ist.

Bei einer ersten vorteilhaften konstruktiven Ausführung der Erfindung umfaßt die Stellvorrichtung einen vom Behälterdruck beaufschlagten Balg mit einer daran angebrachten Schaltstange, welche das als Sperrhebel ausgebildete Arretierelement bei Überschreiten des Behältergrenzdruckes aus der Arretierposition in die Freigabeposition verschwenkt.

Bei einer zweiten vorteilhaften Ausführung der Erfindung umfaßt die Auslösevorrichtung ein an sich bekanntes Sicherheitsventil, dessen vom Behälterinnendruck in Öffnungsrichtung gegen die Kraft einer Ventilfeder beaufschlagter Ventilkörper eine Stellstange aufweist, welche eine Kugel des Arretierelementes bei Überschreiten des Behältergrenzdruckes aus einer einen Bolzen gegen das Sperrglied drückenden Arretierposition in eine Freigabeposition verlagert.

Diese zweite Ausführung kann durch eine Zusatzvorrichtung mit einer vom Behälterdruck beaufschlagten Membran vorteilhaft erweitert sein, welche gegen die Kraft einer Membranfeder auf einen die Kugel im Blockiersinn beaufschlagenden Anschlagbolzen einwirkt. Mit dieser Zusatzvorrichtung werden folgende sicherheitstechnischen Funktionen bewirkt:
a) Bei unüblich niedrigem Druck, wie er beispielsweise durch Lecken oder Zerstörung der den Behälterdruck weiterleitenden Signalleitung entstehen kann, wird die Membran durch die Membranfeder zurückgedrückt, wodurch der Anschlagbolzen die Kugel freigibt, so daß diese aus der Arretierposition in die Freigabeposition gelangt. Dies führt zu einem Schließen der Absperrvorrichtung und stellt eine damit folgeschadensichere Ausbildung (Fail-Safe-Funktion) dar.
b) Das unter Druck stehende Gehäuse der Zusatzvorrichtung oder die Membran selbst können durch Sollbruchstellen so dimensioniert sein, daß eine unzulässige Druckerhöhung zum Bruch dieser Bauteile führt. Damit wird die Membran vom Druck entlastet, so daß die Membranfeder den Anschlagbolzen im Sinne der Freigabe der Kugel verschiebt. Dies tritt bei Versagen der Auslösevorrichtung gemäß der zweiten Ausführung bei einem Druckniveau oberhalb des erwähnten Behältergrenzdruckes ein, so daß die Zusatzvorrichtung in diesem Fall als zweite Sicherung im Falle des Ausfalls der ersten Sicherung, mithin redundant wirkt.

Die Erfindung ist im folgenden anhand schematischer Zeichnungen an Ausführungsbeispielen mit weiteren Einzelheiten näher erläutert. Es zeigen:
- Fig. 1: eine schematische Ansicht einer ersten Ausführung der Erfindung;
- Fig. 2: eine schematische Schnittdarstellung einer zweiten Ausführung der Erfindung, wobei der dem Befüllanschluß und das Ventilgehäuse enthaltende Teil wie in Fig. 1 ausgebildet und deshalb nicht dargestellt sind;
- Fig. 3: eine Abwandlung der zweiten Ausführung in einer Darstellung ähnlich Fig. 2.

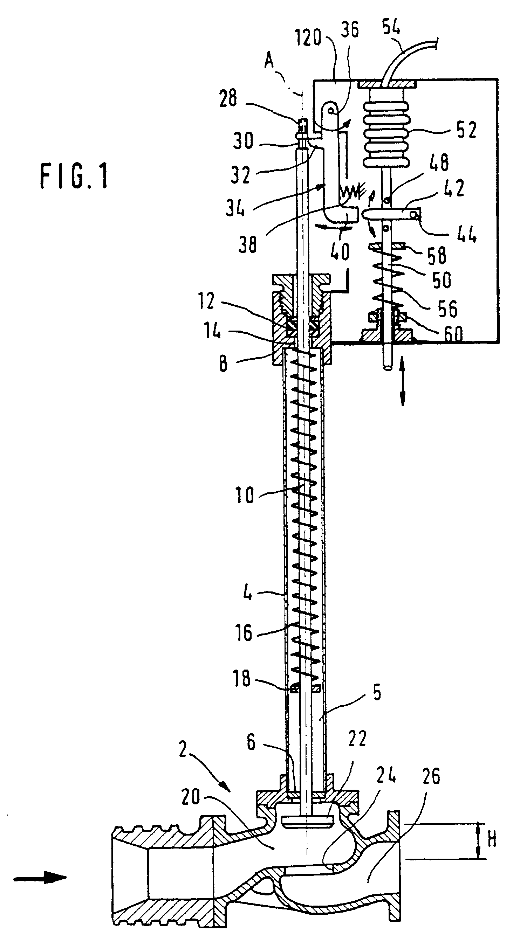

Fig. 1 zeigt die erste Ausführung einer Absperrvorrichtung gemäß der Erfindung. In Fig. 1 bezeichnet die Bezugszahl 2 ein Ventilgehäuse mit einem Einlaßraum 20 und Auslaßraum 26 einschließlich eines daran angeflanschten Rohres 4. Am unteren Ende des Rohres 4 ist eine Führung 6 für eine Ventilspindel 10 mit einem den Einlaßraum 20 von Auslaßraum 26 absperrenden oder freigegebenden Ventilkörper 22 am unteren Ende vorgesehen. Das obere Ende des Rohres ist von einem Kopfstück 8 gebildet, welches eine Dichtpackung 12 sowie eine zweite Führung 14 für die Ventilspindel 10 enthält. Das Kopfstück 8 stützt eine Schließfeder 16 ab, welche an ihrem unteren Ende auf einen an der Ventilspindel befestigten Federteller 18 drückt. Der Federteller 18 kann als Kolben ausgeführt sein, der gegen die Innenwand des Rohres 4 abdichtend geführt ist und mit der Führung 6 einen Dämpfungsraum 5 eines Dämpfers bildet, welcher die Schließgeschwindigkeit des Ventilkörpers 22 beim Absperren des Einlaßraumes 20 vom Auslaßraum 26 über das in dem Dämpfungsraum 5 befindliche kryogene Füllmedium dämpft. Dabei wird das im Dämpfungsraum 5 eingeschlossene gasförmige und/oder flüssige Füllmedium durch die Abdichtungen des Federtellers 18 und/oder der Führung 6 gedrückt. Hier wirkt der Dämpfer mit "kryotechnischer Intelligenz" derart, daß das kryogene Füllmedium zu Beginn einer Befüllung einen hohen Dampfanteil aufweist, so daß durch ein schnelles Schließen der Absperrvorrichtung nahezu kein hydraulisch dynamischer Druckstoß im Einlaßraum 20 und den damit verbundenen Bauteilen erzeugt werden kann. Da die Phasen des Füllmediums im Einlaßraum 20 und Dämpfungsraum 5 im wesentlichen in der gleichen Phase vorliegen, das heißt, daß im Dämpfungsraum 5 überwiegend dann gasförmiges Füllmedium als Dämpfungsmedium vorhanden ist, wenn im Einlaßraum 20 das Füllmedium einen hohen Dampfanteil aufweist, schließt die Absperrvorrichtung dann ohne große Dämpfung schnell, wenn kein Druckstoß im Einlaßraum 20 entseht. Ist das Befüllen des Behälters dagegen weiter fortgeschritten, z.B. nach einem längeren Umfüllvorgang, dann ist der Dämpfungsraum 5 mit kryogenem flüssigem Füllmedium gefüllt. Zum Schließen der Absperrvorrichtung 2 muß aus dem Dämpfungsraum 5 dann die flüssige Phase des Füllmediums verdrängt werden. Die Absperrvorrichtung 2 schließt unter Vermeidung einer schlagartigen Bewegung langsamer und sanfter. Dadurch wird ein hydraulisch dynamischer Druckstoß in der im Einlaßraum 20 vorliegenden flüssigen Phase des Füllmediums vermieden. Die Dämpfung wird zusätzlich durch die Reduzierung der spindelflächenäquivalenten Druckkraft bei hohem Eingangsdruck noch größer und damit der Schließvorrichtung sanfter.

Die Ventilspindel 10 ragt durch die untere Führung 6 hindurch in den Einlaßraum 20 des Ventilgehäuses 2 hinein. An diesen Einlaßraum 20 ist ein mit einem Befüllschlauch eines Tankfahrzeuges (nicht gezeigt) verschraubbarer Anschlußstutzen 3 angeflanscht. Die Ventilspindel 10 trägt einen Ventilkörper in Form eines Ventiltellers 22, der mit einem Sitz 24 im Ventilgehäuse 2 zusammenwirken kann. Dieser Sitz 24 trennt den Einlaßraum 20 vom Auslaßraum 26 des Ventilgehäuses 2, welcher mit dem Innenraum eines Druckbehälters in Verbindung steht. Mit dem Buchstaben H ist der Hubweg des Ventiltellers 22 zwischen seiner größten Offenstellung und seiner am Sitz 24 anliegenden, das Ventil absperrenden Schließstellung bezeichnet.

Die Ventilspindel 10 hat an ihrem oberen, aus dem Rohr 4 herausragenden Ende einen Gewindezapfen 28 zum Anschluß an eine externe, mit Fremdenergie betätigbare Öffnungsvorrichtung (nicht gezeigt) zum Ziehen der Ventilspindel 10 in der Figur 1 gesehen nach oben in Öffnungsstellung entgegen der Kraft der Schließfeder 16.

Unmittelbar unterhalb des Gewindezapfens 28 hat die Ventilspindel 10 eine Rastnut 30 zum Zusammenwirken mit einer Klinke 32 an einem Rasthebel 34. Dieser Rasthebel 34 ist um einen zur Achse A der Ventilspindel versetzten Schwenkpunkt 36 gegen die Kraft einer Feder 38 schwenkbar am Ventilgehäuse 2 angelenkt. Der Rasthebel 34 hat an seinem freien Ende einen Anschlag 40 in Form einer Abkröpfung. Der Anschlag 40 wirkt mit einem Sperrhebel 42 zusammen, der bei 44 bezüglich des Ventils schwenkbar angeordnet ist. Schwenkpunkte (Drehpunkte) 36 und 44 sind an der Halteplatte 120 angebracht. Die Halteplatte 120 ist mit Kopfstück 8 und/oder Ventilkörper 2 fest verbunden. Der Sperrhebel 42 ist über einen Mitnehmer 48 mit einer Schaltstange 50 verbunden, die am unteren Ende eines metallenen Faltenbalges 52 befestigt ist. Dieser Faltenbalg ist über eine Druckleitung 54 mit dem Inneren des Druckbehälters verbunden und somit vom Behälterdruck beaufschlagt. Das untere Ende der Schaltstange 50 ist von einer Druckfeder 56 umgeben, welche sich mit ihrem oberen Ende an dem Federteller 58 und mit ihrem unteren Ende an einer Gewindemutter 60 abstützt, die zur Einstellung der auf die Schaltstange 50 von der Druckfeder 56 ausgeübten, der Balgdruckkraft entgegengesetzten Kraft dient.

Balg 52 und Druckfeder 56 sind so dimensioniert, daß beim Überschreiten oder Unterschreiten eines Behältergrenzdruckes der Sperrhebel 48 ausgelenkt wird, so daß er vom Anschlag 40 freikommt und damit den Rasthebel 34 zu einer Schwenkbewegung um den Schwenkpunkt 36 freigibt. Damit wird gleichzeitig auch die Ventilspindel 10 freigegeben und von der Schließfeder 16 nach unten bewegt, wobei die Ventilspindel 10 den Rasthebel 34 über dessen Klinke 32 entgegen dem Uhrzeigersinn um den Schwenkpunkt 36 verschwenkt und sich soweit nach unten bewegt, bis der Ventilteller 22 am Sitz 24 anliegt und das Ventil folglich abgesperrt ist.

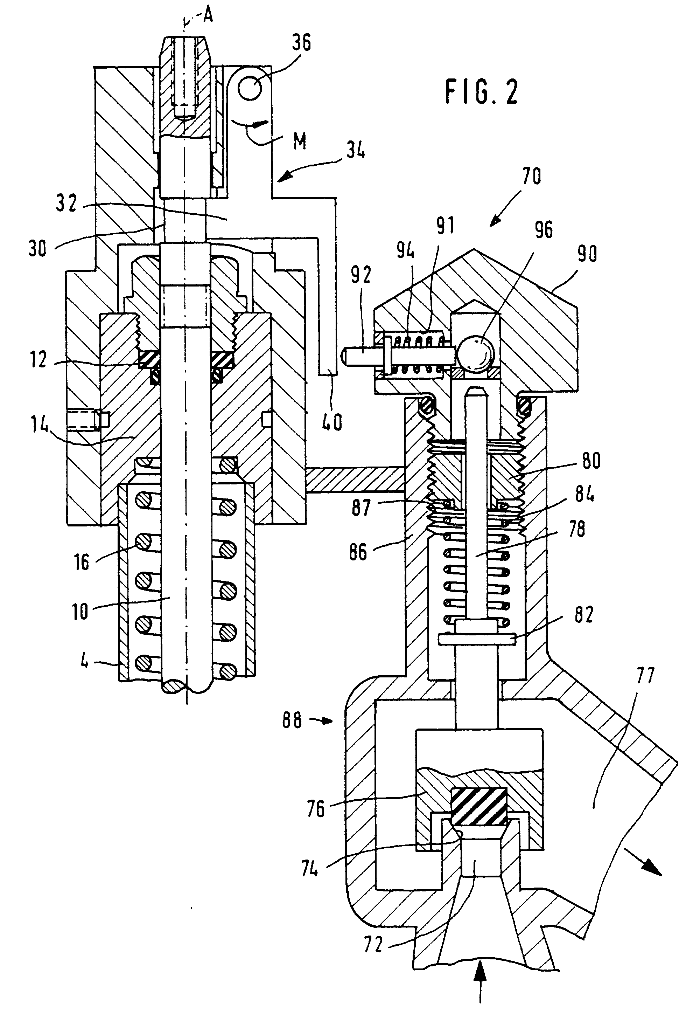

Fig. 2 zeigt eine zweite Ausführung, wobei das Absperrventil selbst sowie auch der untere Teil der Spindel mit Ventilteller gleich wie in Fig. 1 ausgeführt sind. Die Anordnung im oberen Teil ist konstruktiv detailliert und zwar teilweise etwas anders als bei der Ausführung nach Fig. 1, wobei prinzipiell jedoch die gleichen Wirkungen erzielt sind. Gleiche oder gleichwirkende Teile sind mit gleichen Bezugszeichen bezeichnet und nicht nochmals beschrieben.

In der rechten Hälfte der Fig. 2 ist ein an sich bekanntes Sicherheitsventil als Stellvorrichtung dargestellt.

Das insgesamt mit der Bezugszahl 70 bezeichnete Sicherheitsventil steht über dem Eingang 72 mit dem Innenraum eines hier nicht gezeigten Druckbehälters in Verbindung. In den Eingang 72 ist ein Ventilsitz 74 eingearbeitet, der durch einen Ventilkörper 76 absperrbar ist. Mit 77 ist die Abblaseöffnung bezeichnet, die beispielsweise in die Umgebung münden kann. Der Ventilkörper 76, beispielsweise ein Ventilkegel, trägt eine Stellstange 78, die durch eine Gewindebuchse 80 durchgeführt ist. Zwischen dieser Gewindebuchse 80 und einem Federteller 82 an der Stellstange 78 ist eine Ventilfeder 84 abgestützt, welche einen Schließkraft auf den Ventilkörper 76 ausübt. Dieser Schließkraft ist durch Verschrauben der Gewindebuchse 80 in einem mit Innengewinde 87 versehenen Rohrstück 86 des Sicherheitsventilgehäuses 88 einstellbar.

In einem Kopfstück 90, welches ebenfalls in das Innengewinde 87 des Rohrstückes 86 eingeschraubt ist, befindet sich eine Querbohrung 91 zur Aufnahme eines Bolzens 92, der gegen den Anschlag 40 am Rasthebel 34 mittels einer Feder 94 angedrückt und auf seiner Rückseite von einer Kugel 96 an einem Einfahren in die Querbohrung 91 aufgrund einer Schubkraft des Anschlages 40 des Rasthebels 34 auf den Bolzen 92 gehindert ist, wobei die Schubkraft durch ein in Richtung des Pfeiles M drehendes Drehmoment auf den Rasthebel 34 erzeugt wird.

Wird der Überdruck im Behälter zu groß, so verschiebt er den Ventilschließkörper 76 entgegen der Kraft der Feder 84 nach oben. Dabei läuft die Stellstange 78 an der Kugel 96 auf und verschiebt diese in eine Position, welche den Bolzen 92 zu einer Bewegung in Fig. 2 nach rechts in die Querbohrung 91 hinein freigibt. Dies ermöglicht ein Ausschwenken des Rasthebels 34 im Gegenuhrzeigersinn unter der Wirkung des von der Ventilspindel 10 auf die Klinke 32 am Rasthebel 34 ausgeübten Drehmoments M. Der hohe Behälterdruck wird gleichzeitig entsprechend der Abblaseleistung und Schließcharakteristik des verwendeten Sicherheitsventils reduziert.

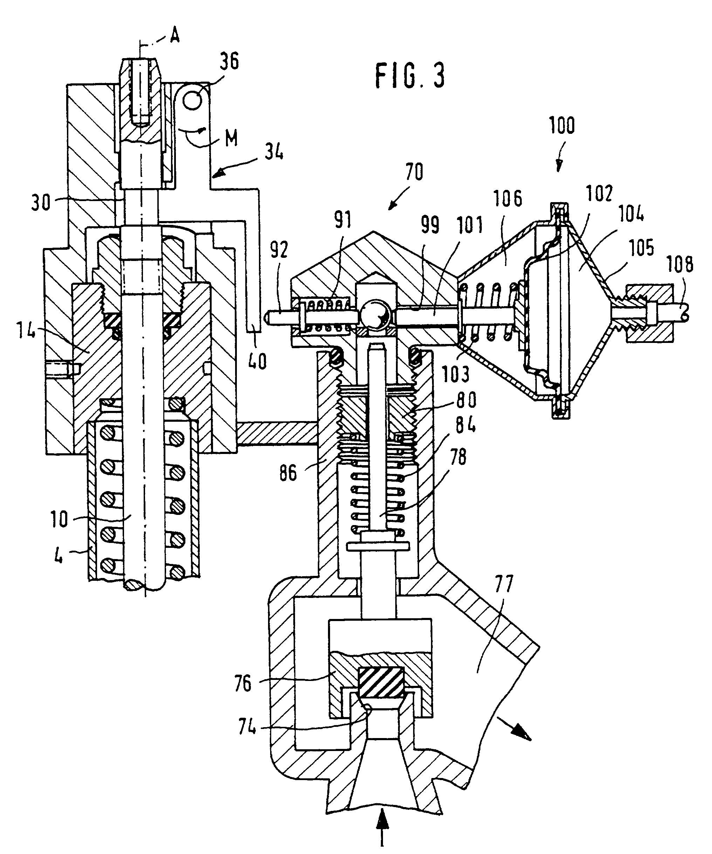

Bei der Abwandlung nach Fig. 3 ist das Sicherheitsventil 90 durch eine Zusatzvorrichtung wie folgt ergänzt: gegenüber der Querbohrung 91 zur Aufnahme des Bolzens 92 und damit fluchtend ist eine weitere Bohrung 99 vorgesehen, welche einen größeren Durchmesser als die Kugel 96 aufweist und in welche sich ein Anschlagbolzen 101 hinein erstreckt. Der Anschlagbolzen 101 ist an einer Membran 102 befestigt, welche einen Druckraum 104 von einem unter Atmosphärendruck stehenden Raum 106 trennt und von einer Membranfeder 103 entgegen dem Druck im Druckraum beaufschlagt ist. Der Druckraum 104 ist über eine Druckleitung 108 an den Innenraum des Druckbehälters (nicht gezeigt) angeschlossen und steht im Normalfall unter dem Behälterdruck, so daß der Anschlagbolzen 101 mittels der Membran 102 in eine die Kugel 96 in ihrer den Bolzen 92 arretierenden Position hält. Sinkt der Druck im Druckraum 104 ab, z. B. aufgrund eines Bruchs der Druckleitung 108, so gibt der Anschlagbolzen 101, verschoben durch Membranfeder 103, die Kugel 96 frei. Diese kann in Bohrung 99 einfahren, so daß Bolzen 92 - in Figur 2 gesehen - nach rechts freigegen wird. Dies wiederum läßt den Rasthebel 34 im Gegenurzeigersinn schwenken, so daß das Ventil 22, 24 absperrt.

Die Membran 102 oder deren druckseitiges Gehäuse 105 können mit mindestens einer nicht dargestellten Sollbruchstelle versehen sein, die bei einem zweiten, höheren Behälterdruck sprengbar ist. Dadurch sinkt der hohe Druck im Druckraum 104 und der oben beschriebene Vorgang wird eingeleitet.

Die in der obigen Beschreibung, den Figuren und den Ansprüchen offenbarten Merkmale können sowohl einzeln als auch in beliebiger Kombination für die Verwirklichung der Erfindung von Bedeutung sein.

## Patentansprüche

1. Absperrvorrichtung für die Befülleinrichtung eines Druckbehälters, insbesondere eines Druckbehälters zur Speicherung tiefkalt verflüssigter Gase,
umfassend:
- ein Absperrventil (22, 23) mit einem Ventilgehäuse (2) und einem durch eine Schließfeder (16) belasteten Ventilkörper (22), der zum Befüllen des Druckbehälters entgegen der Kraft der Schließfeder in Offenstellung bringbar ist;
- eine Vorrichtung (34) zur Arretierung des Ventilkörpers (22) in Offenstellung des Ventils;
- eine vom Behälterdruck beaufschlagte Auslösevorrichtung (42, 50, 52; 70), welche bei Überschreiten eines vorgegebenen Behältergrenzdruckes die Vorrichtung (34) zur Freigabe der Arretierung veranlasst,
- wobei die Vorrichtung (34) einen Rasthebel (34) aufweist, der mit einer Rastausnehmung (30) am Ventilkörper (22) zusammenwirken kann, und der um einen versetzt zur Achse (A) des Ventilkörpers (22) angeordneten Drehpunkt (36) am Ventilgehäuse (2) schwenkbar angelenkt ist,
**dadurch gekennzeichnet,**
- **dass** in Offenstellung des Ventilkörpers (22) dieser unter der Wirkung der Schließfeder (16) an der Rastausnehmung (30) ein Drehmoment auf den Rasthebel (34) ausübt und
- **dass** die Auslösevorrichtung ein Arretierelement (42; 92, 96) umfasst, das gesteuert durch den Behälterdruck zwischen einer den Rasthebel (34) blockierenden Arretierposition und einer den Rasthebel (34) lösenden Freigabeposition verlagerbar ist.

2. Absperrvorrichtung nach Anspruch 1,
**dadurch gekennzeichnet, dass** die Auslösevorrichtung einen vom Behälterdruck beaufschlagten Balg (52) mit einer daran angebrachten Schaltstange (50) aufweist, welche das als Sperrhebel (42) ausgebildete Arretierelement bei Überschreiten und Unterschreiten von Behältergrenzdrücken aus der Arretierposition in die Freigabeposition verschwenkt.

3. Absperrvorrichtung nach Anspruch 1,
**dadurch gekennzeichnet, dass** die Auslösevorrichtung ein Sicherheitsventil (70) umfasst, dessen vom Behälterinnendruck in Öffnungsrichtung gegen die Kraft einer Ventilfeder (84) beaufschlagter Ventilkörper (76) eine Stellstange (78) hat, welche das Arretierelement (92, 96) zum Freigeben des Rasthebels (34) beeinflussen kann.

4. Absperrvorrichtung nach Anspruch 3,
**dadurch gekennzeichnet, dass** das Arretierelement einen den Rasthebel (34) beaufschlagenden Bolzen (92) und eine den Bolzen gegen den Rasthebel (34) haltende Kugel (96) umfasst, welche von der Stellstange (78) bei Überschreiten des Druckgrenzwertes aus der Arretierposition in die den Bolzen und damit den Rasthebel (34) entlastende Freigabeposition verlagert wird.

5. Absperrvorrichtung nach Anspruch 3 oder 4,
**dadurch gekennzeichnet, dass** eine Zusatzvorrichtung (100) mit einer vom Behälterdruck beaufschlagten Membran (102) vorgesehen ist, welche entgegen der Kraft einer Membranfeder (103) auf einen die Kugel (96) im Blockiersinne beaufschlagenden Anschlagbolzen (101) einwirkt.

6. Absperrvorrichtung nach Anspruch 5,
**dadurch gekennzeichnet, dass** die Membran (102) oder ihr druckraumseitiges Gehäuse (105) mit mindestens einer Sollbruchstelle versehen ist, welche so dimensioniert ist, dass sie bei einem über dem Behältergrenzdruck liegenden Wert bricht.

7. Absperrvorrichtung nach einem der Ansprüche 1 bis 6,
**dadurch gekennzeichnet, dass** das Ventil eine in einem Rohr (4) mittels zweier Führungen (6, 14) geführte Ventilspindel (10) aufweist, dass die Schließfeder (16) an einem als Kolben ausgebildeten Federteller (18) abgestützt ist, der an der Ventilspindel (10) fixiert ist, und dass zwischen dem Federteller und der ventilkörperseitigen Führung (6) ein Dämpfungsraum (5) ausgebildet ist.

8. Verfahren zum Dämpfen einer Schließbewegung eines Ventilkörpers einer Absperrvorrichtung nach einem der Ansprüche 1 bis 7, **dadurch gekennzeichnet,**
**dass** ein Dämpfungsmedium in einen Dämpfungsraum (5) eingeleitet wird, dass mit der Schließbewegung des Ventilkörpers (22) das Dämpfungsmedium aus dem Dämpfungsraum (5) verdrängt wird.

9. Verfahren nach Anspruch 8, **dadurch gekennzeichnet, dass** das Dämpfungsmedium eine kryogene Flüssigkeit und/oder ein Gas ist.

## Claims

1. Shut-off arrangement for the filling device of a pressure vessel, in particular of a pressure vessel for storing deep-frozen liquefied gases, comprising
- a shut-off valve (22, 23) with a valve housing (2) and a valve body (22) which is subjected to loading by a closing spring (16) and can be moved into the open position, counter to the force of the closing spring, for the purpose of filling the pressure vessel;
- an arrangement (34) for arresting the valve body (22) in the open position of the valve;
- a triggering arrangement (42, 50, 52; 70) which is subjected to the action of the vessel pressure and, when a predetermined container limit pressure is exceeded, causes the arrangement (34) to release the arresting action,
- the arrangement (34) having a latching lever (34) which can interact with a latching recess (30) on the valve body (22) and which is articulated on the valve housing (2) such that it can be pivoted about a point of rotation (36) which is offset in relation to the axis (A) of the valve body (22),
**characterized**
- **in that**, in the open position of the valve body (22), the latter subjects the latching lever (34) to a torque under the action of the closing spring (16), at the latching recess (30), and
- **in that** the triggering arrangement comprises an arresting element (42; 92, 96) which can be displaced in a controlled manner by the container pressure between an arresting position, in which the latching lever (34) is blocked, and a release position, in which the latching lever (34) is released.

2. Shut-off arrangement according to Claim 1, **characterized in that** the triggering arrangement has a bellows (52) which is subjected to the action of the vessel pressure and has a switching rod (50) which is fitted thereon and by means of which, when the pressure exceeds or drops below vessel limit pressures, the arresting element, which is designed as a blocking lever (42), is pivoted out of the arrested position into the release position.

3. Shut-off arrangement according to Claim 1, **characterized in that** the triggering arrangement comprises a safety valve (70), of which the valve body (76), which is forced in the opening direction, counter to the force of a valve spring (84), by the internal vessel pressure, has an actuating rod (78) which can influence the arresting element (92, 96) in order to release the latching lever (34).

4. Shut-off arrangement according to Claim 3, **characterized in that** the arresting element comprises a pin (92), which acts on the latching lever (34), and a ball (96) which retains the pin against the latching lever (34) and is displaced by the actuating rod (78), when the pressure limit value is exceeded, out of the arresting position into the release position, in which the pin and thus the latching lever (34) are relieved of loading.

5. Shut-off arrangement according to Claim 3 or 4, **characterized in that** there is provided an additional arrangement (100) with a diaphragm (102) which is subjected to the action of the vessel pressure and acts, counter to the force of the diaphragm spring (103), on a stop pin (101), which forces the ball (96) in the blocking direction.

6. Shut-off arrangement according to Claim 5, **characterized in that** the diaphragm (102) or its pressure-chamber-side housing (105) is provided with at least one predetermined breaking point which is dimensioned such that, with a value above the vessel limit pressure, it breaks.

7. Shut-off arrangement according to one of Claims 1 to 6, **characterized in that** the valve has a valve spindle (10) which is guided in a tube (4) by means of two guides (6, 14), **in that** the closing spring (16) is supported on a spring plate (18) which is designed as a piston and is fixed on the valve spindle (10), and **in that** a damping chamber (5) is formed between the spring plate and the valve-body guide.

8. Method of damping a closing movement of a valve body of a shut-off arrangement according to one of Claims 1 to 7, **characterized in that** a damping medium is introduced into a damping chamber (5), and **in that**, with the closing movement of the valve body (22), the damping medium is displaced out of the damping chamber (5).

9. Method according to Claim 8, **characterized in that** the damping medium is a cryogenic liquid and/or a gas.

## Revendications

1. Dispositif de fermeture pour le système de remplissage d'un récipient sous pression, en particulier d'un récipient sous pression permettant de stocker des gaz cryogéniques, comprenant :
- une soupape de fermeture (22, 23) dotée d'un boîtier de soupape (2) et d'un corps de soupape (22) soumis à un ressort de fermeture (16), qui peut être amenée dans une position d'ouverture à l'encontre de la force du ressort de fermeture afin de permettre le remplissage du récipient sous pression ;
- un dispositif (34) permettant de bloquer le corps de soupape (22) dans la position d'ouverture de la soupape ;
- un dispositif de déclenchement (42, 50, 52, 70) soumis à la pression régnant dans le récipient, qui permet le déblocage du dispositif (34) lorsque l'on dépasse une pression limite prédéterminée dans le récipient,
- où le dispositif (34) présente un levier de butée (34), qui peut coopérer avec un creux de butée (30) au niveau du corps de soupape (22) et qui est fixé de manière articulée au boîtier de soupape (2), de façon à pouvoir tourner autour d'un point de rotation (36) disposé en décalage par rapport à l'axe (A) du corps de soupape (22),
**caractérisé en ce que**
- dans la position d'ouverture du corps de soupape (22), celle-ci exerce un couple de rotation sur le levier de butée (34) au niveau du creux de butée (30) sous l'action du ressort de fermeture (16) et
- le dispositif de déclenchement comprend un élément de blocage (42, 92, 96), qui peut être déplacé en fonction de la pression régnant dans le récipient entre une position de blocage permettant de bloquer le levier de butée (34) et une position de déblocage permettant de débloquer le levier de butée (34).

2. Dispositif de fermeture selon la revendication 1,
**caractérisé en ce que**
le dispositif de déclenchement présente un soufflet (52) soumis à la pression régnant dans le récipient ainsi qu'une barre de commande (50) fixée à celui-ci, qui fait basculer l'élément de blocage configuré sous la forme d'un levier de verrouillage (42) de la position de blocage dans la position de déblocage lorsque l'on dépasse des valeurs limites inférieures et supérieures de pression dans le récipient.

3. Dispositif de fermeture selon la revendication 1,
**caractérisé en ce que**
le dispositif de déclenchement comprend une soupape de sécurité (70), dont le corps de soupape (76), actionné dans la direction d'ouverture à l'encontre de la force d'un ressort de soupape (84) par la pression régnant à l'intérieur du récipient, comporte une barre de positionnement (78) qui peut influencer l'élément de blocage (92, 96) pour permettre le déblocage du levier de butée (34).

4. Dispositif de fermeture selon la revendication 3,
**caractérisé en ce que**
l'élément de blocage comprend une goupille (92) permettant d'actionner le levier de butée (34) et une bille (96) permettant de maintenir la goupille contre le levier de butée (34), cette bille étant déplacée par la barre de positionnement (78) de la position de blocage dans la position de déblocage afin de débloquer la goupille et ainsi également le levier de butée (34) lorsque l'on dépasse la valeur limite de pression.

5. Dispositif de fermeture selon la revendication 3 ou 4,
**caractérisé en ce qu'**
un dispositif supplémentaire (100) est pourvu d'une membrane (102) soumise à la pression régnant dans le récipient, qui agit à l'encontre de la force d'un ressort de membrane (103) sur une goupille d'arrêt (101) permettant d'actionner la bille (96) dans le sens du blocage.

6. Dispositif de fermeture selon la revendication 5,
**caractérisé en ce que**
la membrane (102) ou son boîtier situé du côté de la zone sous pression (105) est pourvu d'un point de rupture, qui est conçu de telle sorte qu'il se brise lorsque l'on atteint une valeur supérieure à la pression limite dans le récipient.

7. Dispositif de fermeture selon l'une des revendications 1 à 6,
**caractérisé en ce que**
la soupape présente une tige de soupape (10) introduite dans un tube (4) au moyen de deux guides (6, 14), le ressort de fermeture (16) est soutenu au niveau d'une cuvette de ressort (18) configurée en tant que piston, fixée à la tige de soupape (10), et une zone d'amortissement (5) est formée entre la cuvette de ressort et le guide (6) situé du côté du corps de soupape.

8. Procédé d'amortissement d'un mouvement de fermeture d'un corps de soupape d'un dispositif de fermeture selon l'une des revendications 1 à 7,
**caractérisé en ce qu'**
un moyen d'amortissement est introduit dans une zone d'amortissement (5), et le moyen d'amortissement est déplacé hors de la zone d'amortissement (5) lors du mouvement de fermeture du corps de soupape (22).

9. Procédé selon la revendication 8,
**caractérisé en ce que**
le moyen d'amortissement est un liquide cryogène et/ou un gaz.
